# EUROPÄISCHE PATENTSCHRIFT

(11) **EP 1 278 787 B1**
(45) Veröffentlichungstag und Bekanntmachung des Hinweises auf die Patenterteilung: **28.03.2007**
(21) Anmeldenummer: 01911587.2
(22) Anmeldetag: 03.02.2001
(51) Int. Cl.: A01N 25/10

(54) **Pestizidzubereitungen**
Compositions of pesticides
Compositions de pesticide

(30) Priorität: 16.02.2000 DE 10007044
(43) Veröffentlichungstag der Anmeldung: 29.01.2003
(73) Patentinhaber: Clariant Produkte (Deutschland) GmbH, 65929 Frankfurt am Main (DE)
(72) Erfinder: ZERRER, Ralf, 63791 Karlstein (DE); KUPFER, Rainer, 65795 Hattersheim (DE)
(86) Internationale Anmeldenummer: PCT/EP2001/001170
(87) Internationale Veröffentlichungsnummer: WO 2001/060877

(56) Entgegenhaltungen:
- EP-A- 0 852 238
- WO-A-99/26991
- DE-A- 2 549 840

## Beschreibung

Die vorliegende Erfindung betrifft den Einsatz wasserlöslicher oder wasserquellbarer Copolymere auf Basis von Acrylamido-alkylsulfonsäuresalzen als "drift control agents" in Pflanzenschutzmitteln.

Pestizide werden in sehr effizienter Weise unter Einsatz von Sprühtanks in Flugzeugen, Traktoren oder anderen Vorrichtungen auf landwirtschaftliche Produktionsfelder aufgebracht. Um eine möglichst genaue Platzierung der Wirksubstanzen zu erreichen, ist es erforderlich einen möglichst engen Sprühkegel zu erhalten und ein Abdriften des Sprühnebels aus dem Zielort heraus zu vermeiden.
Die Drift des Sprühkegels wird im wesentlichen durch die Tröpfchengröße bestimmt. Je kleiner die Tröpfchen, umso länger die Verweilzeit in der Luft und umso größer die Tendenz zu verdampfen und/ oder horizontal abzudriften und den Zielort zu verfehlen.
Eine deutliche Minimierung des Drift-Effektes kann durch Zusatz geeigneter "drift control Agentien" zu Pestizid-Formulierungen erreicht werden, die eine Vergrößerung der Tröpfchen im Sprühnebel bewirken. Die mit drift control Agentien modifizierten Formulierungen müssen darüber hinaus gegenüber den Scherkräften, denen sie in den Sprühpumpen- und -düsen ausgesetzt sind, unempfindlich sein. Gute biologische Abbaubarkeit, Kompatibilität mit anderen Bestandteilen der Pflanzenschutzmittel, sowie eine hohe Lagerstabilität und Temperaturstabilität sind weitere Anforderungen an "drift control agents". Es ist Stand der Technik, dass die Rheologie wässriger Mittel durch Zusatz wasserlöslicher Polymere, beispielsweise Polyacrylamide, Acrylamid/ Acrylsäurepolymere, Natriumpolyacrylat, Carboxymethylcellulose, Hydroxyethylcellulose, Methylcellulose, Polysaccharide, natürlicher und synthetischer guar gum (US 4,413,087, US 4,505,827, US 5,874,096) modifiziert werden kann.

Unbefriedigend ist das viskoelastische Verhalten der Additive unter Scher- und Druckkräften.
Unter mechanischer Beanspruchung in der Sprühvorrichtung wird die Viskosität abgesenkt und die Größe der Tröpfchen im Sprühnebel reduziert.

Ein weiterer Nachteil ist, dass die zur Modifizierung der Viskosität wässriger Zubereitungen eingesetzten Polymere in Gegenwart von Elektrolyten, beispielsweise Natriumchlorid, Calciumchlorid und Magnesiumsulfat ihre verdickende Wirkung zum Teil verlieren. Cellulose-Derivate haben eine hohe Toleranz gegenüber Elektrolyten, sind jedoch zu wenig temperaturstabil. Biopolymere, wie xantham gum sind zwar elektrolyt- und thermostabil, jedoch teuer und wenig lagerstabil.

Sowohl aus ökonomischen, als auch aus ökologischen Gründen ist man bestrebt, geeignete "drift control agents" zu finden, die auch unter dem Einfluss von Scherkräften, in Gegenwart von Elektrolyten, sowie bei Temperaturbelastung die Tröpfchenvolumina der wässrigen Mittel effektiv vergrößern und ein Abtriften des Sprühkegels reduzieren.

Polymere aus Acrylamido-2-methyl-propansulfonsäure und Acrylamid und deren Verwendung als Additiv in Zementschlämmen zur Zementation von Tiefbohrungen ist aus DE 197 52 093 bekannt.

Überraschenderweise wurde gefunden, dass wasserlösliche und wasserquellbare Copolymerisate auf Basis von Acrylamidoalkylsulfonaten und olefinisch ungesättigten Monomeren, die mindestens ein Sauerstoff-, Stickstoff-, Schwefel-oder Phosphoratom aufweisen und 0 bis 20 Gew.-% eines geeigneten Vernetzers enthalten, sehr gute Verdickungsmittel wässriger Zubereitungen sind und beim Versprühen dieser Mittel eine Vergrößerung der Teilchen und eine Reduktion des Sprühkegels bewirken. Darüber hinaus zeigen die erfindungsgemäß eingesetzten Polymere gute Viskositätseigenschaften. Die Teilchenvolumina werden unter Einwirkung von Scherkräften nur geringfügig reduziert. Darüber hinaus zeichnen sich die erfindungsgemäßen Mittel durch eine hohe Elektrolyt-, Temperatur- und Lagerstabilität aus.
Gegenstand der Erfindung sind Pestizidzubereitungen enthaltend Copolymere bestehend im wesentlichen aus 1 bis 90 Gew.-% der wiederkehrenden Struktureinheit der Formel (1) 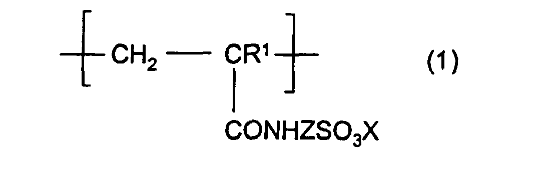 worin R¹ Wasserstoff oder Methyl, Z eine C₁-C₄-Alkylengruppe und X Wasserstoff, Alkali oder Ammonium bedeuten, 10 bis 99 Gew.-% einer wiederkehrenden Struktureinheit, die sich von olefinisch ungesättigten Comonomeren, die wenigstens ein Sauerstoff-, Stickstoff-, Schwefel- oder Phosphoratom aufweisen, ableiten sowie 0 bis 20 Gew.-% aus vemetzenden Strukturen, die aus Monomeren mit mindestens zwei olefinischen Doppelbindungen hervorgegangen sind.

Bevorzugtes Monomer unter der Formel 1 ist 2-Acrylamido-2-methylpropansulfonsäure und deren Salze, vorzugsweise das Ammoniumsalz. Als olefinisch ungesättigte Monomere, die wenigstens ein Sauerstoff-, Stickstoff-, Schwefeloder Phosphoratom enthalten, kommen beispielsweise infrage Styrolsulfonsäure, Acrylamidopropylmethylensulfonsäure (AMPS), Vinylsulfonsäure, Vinylphosphonsäure, Allylsulfonsäure, Methallylsulfonsäure, Acrylsäure, Methacrylsäure und Maleinsäure (und deren Anhydrid) sowie die Salze der im vorangegangenen erwähnten Säuren mit ein- und zweiwertigen Gegenionen. Bevorzugt angewendet werden als Gegenionen Lithium, Natrium, Kalium, Magnesium, Calcium, Ammonium, Monoalkylammonium, Dialkylammonium, Trialkylammonium oder Tetraalkylammonium, worin die Alkylsubstituenten der Amine unabhängig voneinander C₁-C₂₂-Alkylreste darstellen, die mit 0 bis 3 Hydroxyalkylgruppen besetzt sein können, deren Alkylkettenlänge in einem Bereich von C₂-C₁₀ variieren kann. Zusätzlich können auch ein bis dreifach ethoxylierte Ammoniumverbindungen mit unterschiedlichem Ethoxylierungsgrad Anwendung finden. Besonders bevorzugt werden Natrium und Ammonium als Gegenionen. Der Neutralisationsgrad der Molfraktion der im vorangegangenen beschriebenen Säuren kann auch von 100 % abweichen. Geeignet sind alle Neutralisationsgrade zwischen 0 und 100 %, besonders bevorzugt ist der Bereich zwischen 70 und 100 %.

Weiterhin kommen in Frage Ester der Acryl- bzw. Methacrylsäure mit aliphatischen, aromatischen oder cycloaliphatischen Alkoholen mit einer Kohlenstoffzahl von C₁-C₂₂, offenkettige oder cyclische N-Vinylamide (Vinyllactame) mit einer Ringgröße von 3 bis 9, beispielsweise N-Vinylformamid (VIFA), N-Vinylmethylformamid, N-Vinylmethylacetamid (VIMA), N-Vinylacetamid, N-Vinylpyrrolidon (NVP) und N-Vinylcaprolactam. Amide der Acryl- bzw. Methacrylsäure sind ebenfalls als Monomere verwendbar. Als Beispiel sind unter anderem Acrylamid, N,N-Dimethylacrylamid, N,N-Diethylacrylamid, Methacrylamid, alkoxylierte Acryl- bzw. Methacrylamide (z.B. MAPTAC, APTAC) zu nennen. Weitere geeignete Monomere sind 2- und 4-Vinylpyridin, Vinylacetat, Methacrylsäureglycidyl, Acrylnitril, Vinylphosphonsäure und deren Ester bzw. Alkali-, Erdalkali- oder Ammoniumsalze, DADMAC und Vinylsulphonsäure oder deren entsprechende Na⁺, K⁺, Li⁺, Mg²⁺ oder Ca²⁺ Salze. Selbstverständlich können auch Kombinationen der aufgeführten Monomeren vorliegen. Wie bereits erwähnt, kann sich die Summe der eingesetzten Comonomere auf 9,99 bis 98,99 % der Gesamtmasse des Polymeren belaufen.

Die erfindungsgemäß als "drift control agents" in Pflanzenschutzmittel eingesetzten Polymere können vemetzt sein, d.h. sie enthalten Verbindungen mit mindestens zwei Doppelbindungen, die in das Polymer einpolymerisiert sind. Geeignete Vernetzer sind insbesondere Methylenbisacryl- bzw. -methacrylamid, Ester ungesättigter Mono- oder Polycarbonsäuren von Polyolen, wie Diacrylat oder Triacrylat oder Methacrylate, z.B. Butandiol- oder Ethylenglykoldiacrylat bzw. -methacrylat sowie Trimethylolpropantri(meth)acrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, des weiteren Allyl- oder Vinylether, beispielsweise Dipropylenglykol-diallylether, Polyglykoldiallylether, Triethylenglykoldivinylether, Hydrochinon-diallylether, multifunktionelle Alkohole, Tetraethylenglykoldiacrylat, Trimethylolpropan-diallylether, Methylen-bis-acrylamid oder Divinylbenzol.

Die erfindungsgemäßen Polymerisate werden durch radikalische Copolymerisation in C₁-C₆-Alkoholen, vorzugsweise in tert.-Butanol hergestellt.

Die Polymerisation kann im Temperaturbereich zwischen 0 und 150°C, vorzugsweise zwischen 10 und 100°C, sowie bei Normaldruck als auch unter erhöhtem oder erniedrigtem Druck durchgeführt werden. Wie üblich kann die Polymerisation auch in einer Schutzgasatmosphäre, vorzugsweise unter Stickstoff, ausgeführt werden.

Zur Auslösung der Polymerisation können energiereiche Felder oder die üblichen chemischen Polymerisationsinitiatoren herangezogen werden, z.B. organische oder anorganische Peroxide, wie Benzoylperoxid, tert.-Butylhydroperoxid, Methylenketonperoxid, Cumolhydroperoxid, Azoverbindungen, wie z.B. Azodiisobutyronitril sowie anorganische Peroxyverbindungen, wie (NH₄)₂S₂O₈ oder K₂S₂O₈ oder H₂O₂ gegebenenfalls in Kombination mit Reduktionsmitteln wie Natriumhydrogensulfit und Eisen(II)-sulfat oder Redoxsystemen, welche als reduzierende Komponente eine aliphatische und aromatische Sulfonsäure, wie Benzolsulfonsäure und Toluolsulfonsäure oder Derivate dieser Säuren enthalten, wie z.B. Mannichaddukte aus Sulfinsäure, Aldehyden und Aminoverbindungen unlöslich sein.

Die Polymere weisen im allgemeinen ein zahlenmittleres Molekulargewicht von 1000 bis 20 000 000 g/mol auf Bevorzugt ist ein Molekulargewicht von 20 000 bis 5 000 000, insbesondere 100 000 bis 1 500 000 g/mol.

Die Pestizidzubereitungen können auch Copolymere aus den Monomeren der Formeln 2 und 3 enthalten. Die Pestizidzubereitungen enthalten neben diesen Copolymeren, die als drift control agent dienen, die hier üblichen Wirkstoffe wie Herbizide, Insektizide, Fungizide, Akarizide, Bakterizide, Molluskide, Nematizide oder Rodentizide. Bevorzugt sind Herbizidzubereitungen. Geeignete Herbizidwirkstoffe sind insbesondere Glyphosate, aber auch Acifluorfen, Asulam, Benazolin, Bentazone, Bilanafos, Bromacil, Bromoxynil, Chloramben, Clopyralid, 2,4-D, 2,4-DB, Dalapon, Dicamba, Dichlorprop. Diclofop, Endothall, Fenach, Fenoxaprop, Glamprop, Fluazifop, Flumiclorac, Fluoroglacofen, Fomesafen, Fosamine, Glufosinate, Haloxyfop, Imazapic, Imazamethabenz, Imazamox, Imazapyr, Imazaquin, Imazethapyr, loxynil, MCPA, MCPB, Mecoprop, Methylarsonicacid/MSMA, Naptalam, Picloram, Quinclorac, Quizalofop, 2,3,6-TBS-TCA.

Die erfindungsgemäßen Zubereitungen können die Copolymerisate auf Basis von Acrylamido-alkylsulfonsäuresalzen als drift control agents in nahezu beliebiger Menge enthalten. Bevorzugt sind folgende Zubereitungen:

Formulierungen als "Tank-mix" und "ready to use compositions" enthalten 0,01 bis 10 Gew.-%, bevorzugt 0,0025 bis 2 Gew.-% Pestizid und 0,0001 Gew.-% bis 5 Gew.-%, bevorzugt 0,0025 bis 2 %, besonders bevorzugt 0,02 bis 1 % des erfindungsgemäßen Copolymers. Das Gewichtsverhältnis Copolymerisat zu Pestizid kann hier zwischen 1: 10 bis 500: 1, insbesondere 1:4 bis 4:1 sein.

Konzentrat-Formulierungen, die vor dem Gebrauch verdünnt werden, können das Pestizid in den Gewichtsmengen 5 bis 60 %, bevorzugt 20 bis 40 % und das Copolymer auf Basis von Acrylamido-alkylsulfonsäuresalzen in den Mengen von 3 bis 50 Gew.-% enthalten. Das Gewichtsverhältnis Copolymer zu Pestizid kann hier zwischen 1:20 bis 1:1, bevorzugt 1:10 bis 1:2 liegen.

Die erfindungsgemäßen Formulierungen können neben den Copolymeren auf Basis von Acrylamido-alkylsulfonsäuresalzen weitere Verdickungsmittel, Antigelmittel, Frostmittel, Lösungsmittel, Dispergiermittel, Emulgatoren, Konservierungsmittel, Adjuvants, Bindemittel, Antischaummittel, Verdünner, und Netzmittel enthalten.

Als Verdickungsmittel können Xanthan gum und/oder Cellulose, beispielsweise Carboxy-, Methyl-, Ethyl- oder Propylcellulose in den Gewichtsmengen von 0,01 bis 5 % bezogen auf das fertige Mittel eingesetzt werden. Als Lösungsmittel eignen sich Monopropylenglycol, tierische und mineralische Öle. Als Dispergiermittel und Emulgator eignen sich nichtionische, amphotäre, kationische und anionische Tenside.
Als Konservierungsmittel können organische Säuren und ihre Ester, beispielsweise Ascorbinsäure, Ascorbinpalmitat, Sorbat, Benzoesäure, Methyl. und Propyl-4- Hydroxybenzoat, Propionate, Phenol, beispielsweise 2-Phenylphenat, 1,2-Benzisothiazolin-3-on, Formaldehyd, schwefelige Säure und deren Salze eingesetzt werden. Als Entschäumer eignen sich Polysilicone. Als Adjuvants stehen zur Verfügung Polyglycerinester, Alkoholethoxylate, Alkylpolysacharide, Fettaminethoxylate, Sorbitan- und Sorbitolethoxylatderivate und Derivate des Alk(en)ylbemsteinsäureanhydrid sein. Als Verdünner, Absorber oder Träger eignen sich Carbon Black, Talg, Kaolin, Aluminium-, Calcium- oder Magnesiumstearat, Natriumtripolyphosphat, Natriumtetraborat, Natriumsulfat, Silikate und Natriumbenzoat.

Als Netzmittel können Alkoholethoxylate/-propoxylate verwendet werden.

Zur Beurteilung des Einflusses der erfindungsgemäß eingesetzten Coplymerisate aus dem Natriumsalz des 2-Acrylamido-2-methylsulfonates und Acrylamid auf das Drift-Potential einer wässrigen Formulierung wurden die durchschnittlichen Tröpfchenvolumina des Sprühnebels, sowie die Verteilung der Tröpfchengrößen, sowohl unter Normalbedingungen als auch unter der Einwirkung von Scherkräften, ermittelt und den für reines Wasser ermittelten Werten gegenübergestellt.

**Tabelle 1: Mittlerer Durchmesser (µm) der Tröpfchen**

| Substanz | Durchmesser (µm) | |
|---|---|---|
| | ohne Scherkraft | mit Scherkraft |
| Wasser | 262 | 260 |
| Emigen DPR | 476,1 | 296,3 |
| Polymer 1 | 510 | 420 |

Eine wässrige Lösung aus 0,12 g/1 Polymer 2000 bzw. 12,00 g/l Emigen DPR wurde bei einer Temperatur von 20°C mit einer Teejet XR8003 VS Spraydüse (tip@ 40 psi) mit einer Distanz von 30 cm auf ein Aerometrics PDPA Laser Meßsystem (325 Volt) aufgesprüht und die Teilchendurchmesser von 10 000 Tröpfchen ermittelt. Die Messung wurde jeweils dreimal wiederholt.
Mittels einer Drehkolbenpumpe mit einer Umdrehungsgeschwindigkeit von 4,0 gal/min und insgesamt 12 Umdrehungen wurden die wässrigen Lösungen bei einer Temperatur von 20°C Scherkräften ausgesetzt und die Tröpfchendurchmesser ermittelt.

**Tabelle 2: Anteil der Tröpfchen in Volumen-% < 150 µm**

| Substanz | Volumen-% | |
|---|---|---|
| | ohne Scherkraft | mit Scherkraft |
| Wasser | 19,0 | 19,0 |
| Emigen DPR | 6,6 | 16,6 |
| Polymer 1 | 7,0 | 9,5 |

Chemische Bezeichnung von Emigen ^{®}DPR aus Tabelle 1 und 2: teilverseiftes Polyacrylamid

Die Herstellung des Polymers 1 erfolgte wie folgt: Copolymerisat aus 70 Gew.-% AMPS und 30 Gew.-% AM, Ammoniumsalz

In einem 3 Liter Quickfitkolben mit Ankerrührer, Rückflusskühler mit Abgaswäscher, kombiniertes Thermometer/pH Meter und einem Gaseinleitungsrohr wurden 1700 g rektifiziertes tert.-Butanol vorgelegt und mit 50 ml destilliertem Wasser versetzt. Das Reaktionsgefäß befand sich in einem Heizbadthermostaten.

Dieses Reaktionsgefäß wurde mit Stickstoffgas überschichtet und im leichten Stickstoffgegenstrom 245 g Acrylamido-2-methylpropansulfonsäure AMPS 2404^{®} (eingetragene Marke der Lubrizol) eingetragen. Das AMPS löste sich im tert.-Butanol nicht vollständig auf und lag teilweise als Feststoffdispersion vor. Der pH-Wert dieses Gemisches lag unterhalb von 1. Durch das Gaseinleitungsrohr wurde oberhalb der flüssigen Phase gasförmiges Ammoniak eingeleitet bis der pH-Wert der Dispersion zwischen 7 und 8 lag. Nach Erreichen des gewünschten pH-Wert Bereichs wurde noch 1 Stunde nachgerührt und der pH-Wert kontinuierlich erfasst. Das Reaktionsgefäß wurde wieder mit Stickstoff überschichtet und es wurden 105 g Acrylamid eingetragen. Nach Eintrag des Acrylamids wurde erneut der pH-Wert kontrolliert und gegebenenfalls in den Bereich pH 7-8 korrigiert. Es wurde für mindestens 1 Stunde ein konstanter Stickstoffstrom durch die Lösung geleitet. Nach dieser Inertisierungszeit wurde der Restsauerstoffgehalt durch eine Sauerstoffelektrode überprüft. Sollte der gemessene Wert an Restsauerstoff in der flüssigen Phase den Wert von 1 ppm übersteigen, muss erneut inertisiert werden bis dieser Wert erreicht wird. Danach wurden im leichten Stickstoffstrom 1,5 g AIBN zugegeben und der Reaktionskessel auf 60°C erwärmt. Kurz nach Erreichen einer Innentemperatur von 60°C wurde das Einleiten von Stickstoffgas beendet und die Polymerisationsreaktion startete typischerweise nach einigen Minuten, was durch eine Temperaturerhöhung 10- 15°C festgestellt werden konnte. Ungefähr 30 Minuten nach Einsetzen der Polymerisationsreaktion war das Temperaturmaximum überschritten und die Temperatur im Reaktionsgefäß wurde durch das Heizbad bis zum Siedepunkt des tert.-Butanols erhöht. Unter leichtem Rückfluss wurde die nun viskose Masse zwei Stunden nachgerührt.

Das Reaktionsprodukt, welches als viskose Suspension von Polymeren im tert.-Butanol vorliegt, wurde durch Abfiltrieren des tert.-Butanols und anschließender Trocknung im Vakuumtrockenschrank abgetrennt.

### Ausbeute: 365 g Polymer 1

Ammoniumsalz von Poly (Acrylamido-2-methylpropansulfonsäure-co-Acrylamid) Trockengehalt: 96 Gew.-% (2,5 % tert.-Butanol, 1,5 % Wasser)
k-Wert einer 0,5 Gew.-% Lösung: 212

## Patentansprüche

1. Pestizidzubereitungen, enthaltend Copolymere bestehend im wesentlichen aus 1 bis 90 Gew.-% der wiederkehrenden Struktureinheit der Formel (1) 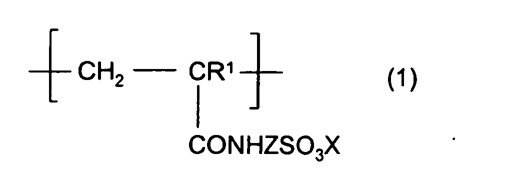 worin R¹ Wasserstoff oder Methyl, Z eine C₁-C₄-Alkylengruppe und X Wasserstoff, Alkali oder Ammonium bedeuten, 10 bis 99 Gew.-% einer wiederkehrenden Struktureinheit, die sich von olefinisch ungesättigten Comonomeren, die wenigstens ein Sauerstoff-, Stickstoff-, Schwefel- oder Phosphoratom aufweisen, ableiten sowie 0 bis 20 Gew.-% aus vemetzenden Strukturen, die aus Monomeren mit mindestens zwei olefinischen Doppelbindungen hervorgegangen sind.

## Claims

1. A pesticide composition comprising copolymers, consisting essentially of from 1 to 90% by weight of the repetitive structural unit of the formula (1) 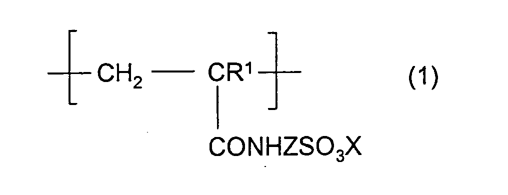 in which R¹ is hydrogen or methyl, Z is a C₁-C₄-alkylene group and X is hydrogen, an alkali metal or ammonium, from 10 to 99% by weight of a repetitive structural unit which is derived from olefinically unsaturated comonomers containing at least one oxygen, nitrogen, sulfur or phosphorus atom and from 0 to 20% by weight of crosslinking structures originating from monomers having at least two olefinic double bonds.

## Revendications

1. Préparations pesticides contenant des copolymères constitués essentiellement de 1 à 90 % en poids de l'unité structurelle récurrente répondant à la formule (1) 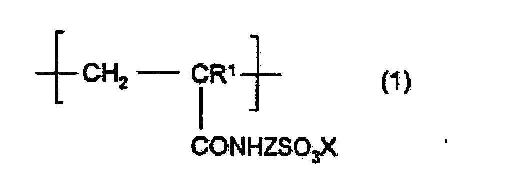 dans laquelle R¹ représente l'hydrogène ou méthyle, Z représente un groupe alkylène en C₁ à C₄ et X représente l'hydrogène, un alcalin ou l'ammonium, de 10 à 99 % en poids d'une unité structurelle récurrente, que l'on dérive de comonomères oléfiniquement insaturés présentant au moins un atome d'oxygène, d'azote, de soufre ou de phosphore ainsi que de 0 à 20 % en poids de structures réticulantes qui proviennent de monomères présentant au moins deux doubles liaisons oléfiniques.
